(19) Europäisches Patentamt
European Patent Office
Office européen des brevets

(11) **EP 3 091 846 B1**

(12) **EUROPEAN PATENT SPECIFICATION**

(45) Date of publication and mention
of the grant of the patent:
**08.05.2019 Bulletin 2019/19**

(21) Application number: **15701584.3**

(22) Date of filing: **06.01.2015**

(51) Int Cl.:
*A23G 1/54* (2006.01)      *A23G 3/34* (2006.01)
*A23G 3/54* (2006.01)

(86) International application number:
**PCT/IB2015/050086**

(87) International publication number:
**WO 2015/101963 (09.07.2015 Gazette 2015/27)**

(54) **CONFECTIONERY PRODUCT AND PROCESS FOR ITS PREPARATION**

KONFEKTPRODUKT UND VERFAHREN ZU DESSEN HERSTELLUNG

PRODUIT DE CONFISERIE ET PROCÉDÉ POUR LE PRÉPARER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2014 GB 201400131**

(43) Date of publication of application:
**16.11.2016 Bulletin 2016/46**

(73) Proprietor: **Kraft Foods R&D, Inc.
Illinois 60015 (US)**

(72) Inventors:
• **WOOD, Xavier
Birmingham B30 2LU (GB)**
• **HAINES, Rod
St Ives
Cambridgeshire PE27 4LG (GB)**
• **MELLORS, Mark
St Ives
Cambridgeshire PE27 4LG (GB)**

(74) Representative: **Bailey, Jennifer Ann
Marks & Clerk LLP
Alpha Tower
Suffolk Street Queensway
Birmingham B1 1TT (GB)**

(56) References cited:
WO-A1-01/78519          WO-A1-2008/030274
WO-A1-2008/079927       WO-A1-2011/027103
WO-A2-2010/049671       DE-U1- 29 908 226
GB-A- 1 483 614         GB-A- 2 432 773
GB-A- 2 503 232         KR-A- 20010 092 474
US-A1- 2005 100 640     US-A1- 2010 055 257

EP 3 091 846 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for preparing a confectionery composition and compositions made thereby.

There is a continuing desire to provide new products and eating experiences for consumers. Liqueur filled chocolates are popular and provide a liquid sensation when the consumer bites through the chocolate shell and releases the filling. However, they are quite messy to consume. Caramel filled chocolates are also popular but provide a different impact on the consumer due to the high viscosity of the caramel filling.

US 2010/055257 discloses a filled composition, comprising a chocolate shell containing a liquid filling. The filling may further include other ingredients, such as nuts or chocolate powder.
KR 20010092474 discloses a chocolate shell containing a cream or paste-like filing which comprises powdered material, such as nut powder or fruit powder.

WO 2010/049671 discloses a confectionery composition comprising a chocolate shell enclosing a centre-fill material which may be a liquid. The centre-fill material may further comprise solid inclusions, such as nut or cereal pieces.

US 2005/100640 discloses an edible product comprising an edible film shell and a liquid filling. The filling may have particulate matter suspended therein.

DE 29908226 discloses a filled composition, comprising a chocolate shell containing a liqueur filling and strawberry pieces.

WO 2011/027103 discloses a confectionery composition comprising interconnected pores that contain a filling, wherein the filling may be a liquid.

GB 2503232 discloses a confectionery composition comprising a plurality of adjacent extruded product portions. The product portions may be hollow and filled with any suitable material, which may be a solid, liquid or a mixture thereof.

GB 2432773 discloses a confectionery composition comprising wafer shells having cavities which contain fat-based cream fillings, or other viscous fillings. The filling may contain edible inclusions, such as biscuit or wafer pieces.

WO 2008/079927 discloses a confectionery product comprising a hard shell surrounding a filling. The filling may be a liquid, paste, powder and/or hard confectionery.

WO 2008/030274 discloses a chewing gum composition comprising a gum region surrounding a centre-fill composition. The centre-fill composition comprises polyol particles suspended in a fluid carrier, and may include additional non-liquid components, such as flavour beads or fruit or nut particles.

Problems with existing products are related to complex manufacturing processes, expensive packaging, and reduced consumer acceptance.

The present invention provides a process for preparing a confectionery composition that alleviates one or more of the problems mentioned above.

In accordance with a first aspect of the present invention, there is provided a confectionery composition comprising an edible shell having a filling therein, said filling comprising a plurality of solid inclusions and at least one liquid component, wherein the plurality of solid inclusions are discrete pieces and wherein the discrete pieces are close packed within the edible shell so that they cannot move over one another..

The filling exhibits a tendency to be retained within the shell when the shell is opened, for instance, by breaking the confectionery product into parts or by biting into the product.

Without wishing to be bound by theory, the inventors propose that the at least one liquid component adheres to the shell and the plurality of solid inclusions as a result of surface tension. The adhesion may be augmented by individual characteristics of the solid inclusions and/or the at least liquid component. Alternatively or concurrently, the increased adhesion may result from an interaction between the solid inclusions and the liquid component.

WO 01/78519 (Nestle S.A.) relates to a confectionery product comprising a moulded shell and a substantially planar base portion securely sealed onto the edges of the shell. The sealed assembly formed by the shell and the closure base portion delimits an inner cavity which is partially occupied with a mass formed of solid edible discrete pieces in a free-flowing state and comprises a free gas volume including interstitial spaces formed within the mass of pieces. There is no disclosure of a liquid component in addition to free-flowing discrete pieces. In fact, the purpose of WO 01/78519 cavity is to allow pieces to flow out of the shell.

A component is considered liquid in the context of the present invention if it is liquid at standard ambient temperature and pressure (SATP, 25°C and 100kPa).

A component is considered solid if it is solid at SATP and does not dissolve in the at least one liquid component.

It is understood that the edible shell (the shell) defines a cavity. The cavity has a volume (the cavity volume) in which the inclusions and the at least one liquid component are contained.

The plurality of solid inclusions are discrete pieces i.e. they are not interconnected. The discrete pieces are packed so that they cannot move within the shell.

In accordance with the second aspect of the present invention, there is provided a method for producing a confectionery composition according to the first aspect of the present invention, comprising

providing a plurality of solid inclusions;

providing at least one liquid component;

placing the plurality of solid inclusions and the at least one liquid component in an edible shell; and

sealing the solid inclusions and the at least one liquid component within the edible shell,

wherein placing the plurality of solid inclusions in the edible shell comprises placing discrete pieces in the edible shell, and wherein the discrete pieces are close packed within the edible shell so that they cannot move.

The solid inclusions may be placed in the edible shell before the liquid component, after the liquid component, or at the same time as the liquid component. Typically, the solid inclusions will be placed in the edible shell before the liquid component. In this way, the liquid component can be added to fill the available volume within the shell without spillage.

The discrete pieced are close packed within the shell so that they cannot move.

In one such embodiment the method further comprises adhering the discrete pieces to form a network of interconnected solid inclusions within the shell. i.e. the network is formed after the solid inclusions are placed in the edible shell.

One method for forming a network of solid inclusions is to employ solid inclusions having a coating which softens at elevated temperature e.g. a fat-based coating such as a chocolate coating. In this way the solid inclusions can be heated to soften the coating and then adhere the inclusions to one another on cooling.

The heat treatment should only melt the surface of the plurality solid inclusions.

In one embodiment, the method comprises a step of cooling the interconnected solid inclusions.

In one embodiment, the edible shell has a partially molten inner surface to cause the inclusions to be embedded therein.

The control of the melting conditions ensures that the surface of the solid inclusions melts only just enough to fuse adjacent solid inclusions together, without completely melting the solid inclusions or any coating away.

## Liquid component(s)

The viscosity of the at least one liquid component will affect the sensation perceived by the consumer; the lower the viscosity the more liquid the sensation. The viscosity of the liquid filling should be greater than water but less than that of a conventional soft caramel. Viscosity can be described in a number of ways.

The viscosity of common foodstuffs is known from the literature. For example, the following values were obtained from a Viscosity Chart on the BASCO website: http://www.bascousa.com/images/advisors/407%20condensed.pdf.

| | Absolute viscosity (cP) | Temperature (°F/°C) | | Absolute viscosity (cP) | Temperature (°F/°C) |
|---|---|---|---|---|---|
| Butter fat | 42 | 110/43 | Corn syrup | 12000 | 130/54 |
| Butter fat | 20 | 150/66 | Gelatin, 37%solids | 1190 | 110/43 |
| Cottage cheese | 30000 | 65/18 | Fruit juice | 55-75 | 65/18 |
| Cocoa butter | 50 | 140/60 | Honey | 1500 | 100/38 |
| Cocoa butter | 0.5 | 210/99 | Mashed potato | 20000 | 100/38 |
| Condensed milk | 40-80 | 100-120/38-49 | Mayonnaise | 20000 | 70/21 |
| Condensed milk, 75% solids | 2160 | 70/21 | Molasses | 1400-13000 | 100/38 |
| Cream, 45% fat | 48 | 60/16 | Orange juice concentrate (30 brix) | 630 | 70/21 |
| Milk | 2.0 | 65/18 | Orange juice concentrate (30 brix) | 91 | 175/79 |
| Yoghurt | 152 | 105/41 | Sorbitol | 200 | 70/21 |
| Caramel | 400 | 140/60 | Toffee | 87000 | 100/38 |
| Chocolate | 17000 | 120/49 | Tomato paste, 30% | 195 | 65/18 |

(continued)

|  | Absolute viscosity (cP) | Temperature (°F/°C) |  | Absolute viscosity (cP) | Temperature (°F/°C) |
|---|---|---|---|---|---|
| Chocolate milk | 280 | 120/49 | Olive oil | 40 | 100/38 |
| Coffee, 30-40% liquor | 10-100 | 70/21 | Palm oil | 43 | 100/38 |

The at least one liquid component may be a Newtonian liquid or a non-Newtonian liquid. The viscosity of Newtonian liquids is independent of the rate of shear (mixing) but changes with temperature (e.g. water, ethanol, glycerol). Non-Newtonian liquids (e.g. chocolate) are affected by the presence of solids in suspension so their viscosity depends on temperature and the rate of shear.

Viscosity can be measured using a rotational viscometer (or rheometer) such as the Bohlin, Brookfield or Haake viscometer. In one embodiment viscosity is measured using a Bohlin CV050 rheometer. In another embodiment viscosity is measured using a Brookfield RVDVIII Ultra rheometer

In one embodiment the at least one liquid component is a Newtonian liquid and has a viscosity measured at 25°C of no more than 20, 15, 10, 5, 3, 2, 1.0, 0.50, 0.10, 0.05, 0.01 or 0.001Pa.s.

In one embodiment the at least one liquid component is a Newtonian liquid and has a viscosity measured at 25°C of at least 0.001, 0.01, 0.05, 0.1, 0.50, 1.0, 2, 3, 4 or 5Pa.s. In a particular embodiment the liquid filling has a viscosity at 25°C of from 0.05 to 0.07. For comparison, water has a viscosity at 25°C of approximately $8.94 \times 10^{-4}$Pa.s.

The viscosity of the liquid filling can be measured using a Bohlin CV050 rotational rheometer at a constant temperature of 25°C. The effect of shear can be determined by increasing the shear stress from 1 to 10Pa.

In one series of embodiments the liquid filling has a viscosity measured at $10s^{-1}$ of less than 100, 85 or 60Pa.s at 25°C; of less than 50, 35 or 10Pa.s at 35°C; and/or less than 25, 15, 5 or 1Pa.s at 45°C.

In one series of embodiments the at least one liquid component is a non-Newtonian liquid and has a viscosity measured at 30°C of less than 15Pa.s at $1s^{-1}$, less than 13Pa.s at $10s^{-1}$ and/or less than 7Pa.s at $100s^{-1}$.

The viscosity of the liquid filling can be described with reference to the Power Law (or Ostwald) Model. This fits a typical viscosity vs. shear rate curve and takes the form of:

$$y = Kx^{n-1}$$

Where y = viscosity, x = shear rate, K = consistency coefficient (viscosity at a shear rate of $1s^{-1}$) and n=power law index (or flow law index).

n is a measure of how Newtonian the liquid is. A Newtonian liquid has n = 1, such that y = K i.e. no change in viscosity with shear rate. For a shear thinning liquid n is greater than 0 but less than 1. For a shear thickening liquid n is greater than 1.

In one embodiment the liquid filling has a power law index (n) of from 0.8 to 1.2 or from 0.9 to 1.1. The power law index (n) can be calculated using the following protocol (provided by Brookfield):

Instrument: Brookfield RVDVIII Ultra rheometer fitted with a Small Sample adaptor and spindle/chamber SC4-15/7R. Temperature: 25°C. RPM down-ramp: 50, 40, 30, 20, 10, 5, 2.5, 1.5. 1 minute hold at each speed before recording viscosity value. Plot Viscosity vs. Shear rate to determine n.

The pour point of a liquid is the lowest temperature at which it will flow before it becomes semi-solid and loses its flow characteristics. In one embodiment the at least one liquid component has a pour point of less than 25, 20, 15, 10, 5 or 3°C.

It is an advantage of providing liquids in these viscosity ranges that they provide a liquid appearance and mouth feel to the consumer. The inventors found that surprisingly, the provision of such liquids in a network of solid inclusions results in a product that does not show a tendency to drip when opened.

In one embodiment, the at least one liquid component constitutes at least 1%, 5%, 10%, 15%, 20%, 25%, 30%, 35% or 40%, of the volume of the cavity.

In one embodiment, the at least one liquid component constitutes less than 40%, 35%, 30%, 25%, 20%, 15%, 10%, or 5% of the volume of the cavity.

In one embodiment, the at least one liquid component constitutes from 1 to 50%, from 5 to 40%, from 5 to 35%, from 5 to 30%, from 5 to 25%, from 10 to 40%, from 10 to 35%, from 10 to 30%, from 10 to 25%, from 15 to 40%, from 15 to 35%, from 15 to 30%, from 15 to 25%, or from 17 to 23% of the volume of the cavity.

The at least one liquid component can be any liquid confectionery material such as an aqueous solution, a water-in-oil emulsion or an oil-in-water emulsion. It will be understood that the at least one liquid component must be edible.

In one embodiment, the at least one liquid component is selected from the group comprising fruit juice; vegetable juice; fruit puree (coulis); vegetable puree; fruit sauce;vegetable sauce; honey; liqueur, fondant, alcohol (ethanol), caramel, ; sugar syrup; polyol syrup; hydrogenated starch hydrolysates syrup; emulsions; vegetable oil; glycerin; propylene glycol; ethanol; , dairy- based liquids such as milk, cream, etc.; fondant;; an isomalt-comprising solution; and combinations thereof. In one such embodiment the liquid filling is selected from the group consisting of fruit juice; vegetable juice; fruit puree; fruit pulp; vegetable pulp; vegetable puree; fruit sauce; vegetable sauce; sugar syrup; polyol syrup; glycerin; caramel and combinations thereof.

In one embodiment the at least one liquid component is a flavoured sugar or sugar substitute syrup. In one such embodiment the syrup comprises bulk sweetener (e.g. sucrose or polyol), water and flavouring. In one embodiment the sugar or sugar substitute syrup has a solids content of no more than 75%, no more than 60%, no more than 50 or no more than 40%. A reduction in solids content is expected to reduce the viscosity of the liquid filling and thereby provide a greater contrast with the solid inclusions. In one embodiment the at least one liquid filling is selected from one or more of almond, apple, apricot, banana, basil, butterscotch, blueberry, caramel, cardamom, cherry, chocolate, hazelnut, kiwi, lime, mango, melon, orange, peach, raspberry, strawberry, vanilla syrup. Suitable syrups are commercially available and include those sold under the Monin® brand.

Sugars include sucrose, glucose, fructose, lactose and maltose and any combination thereof). Sugar substitutes include sugar alcohols such as sorbitol, xylitol, mannitol, lactitol and isomalt.

The solid inclusions and/or the at least one liquid component also may include any components known in the art for incorporation with centre-fill compositions. In some embodiments, the solid inclusions and/or the at least one liquid component may contain traditional ingredients well known in the confectionery arts, such as flavouring agents, colourings, sweetening agents, and the like, and mixtures thereof. In addition to confectionery additives, the solid inclusions and/or the at least one liquid component may also contain pharmaceutical additives such as medicaments, breath fresheners, vitamins, minerals, caffeine, fruit juices, and the like, and mixtures thereof.

A low water activity will assist in rendering the at least one liquid component microbiologically stable. In one embodiment the liquid component has a water activity measured at 25°C of 1 or less than 1.0, 0.95, 0.9, 0.8, 0.7, 0.65 or 0.60.

## Solid inclusions

The solid inclusions are close packed within the shell so that they cannot move over one another. The close packing is dictated by the size of the inclusions and the size of the cavity. For instance, a plurality of spherical solid inclusions of the same size will be limited to 74% packing density if they can be arranged in a hexagonal close packing structure. If the plurality of spherical solid inclusions is confined to a simple cubic packing structure, the packing density is limited to 52%. Simulations have shown that spheres randomly filled into a volume reach packing efficiencies of between 60% and 68%. It is thus understood that, other variations of the particle properties aside, the volume of spherical solid inclusions in a close packed shell can be expected to be in the region of between 52% and 74% of the volume of the cavity in a first approximation. The volume of solid inclusions in the cavity can be lower if efficient packing densities are not achieved and the volume of solid inclusions may be lower or higher if the solid inclusions are not spherical.

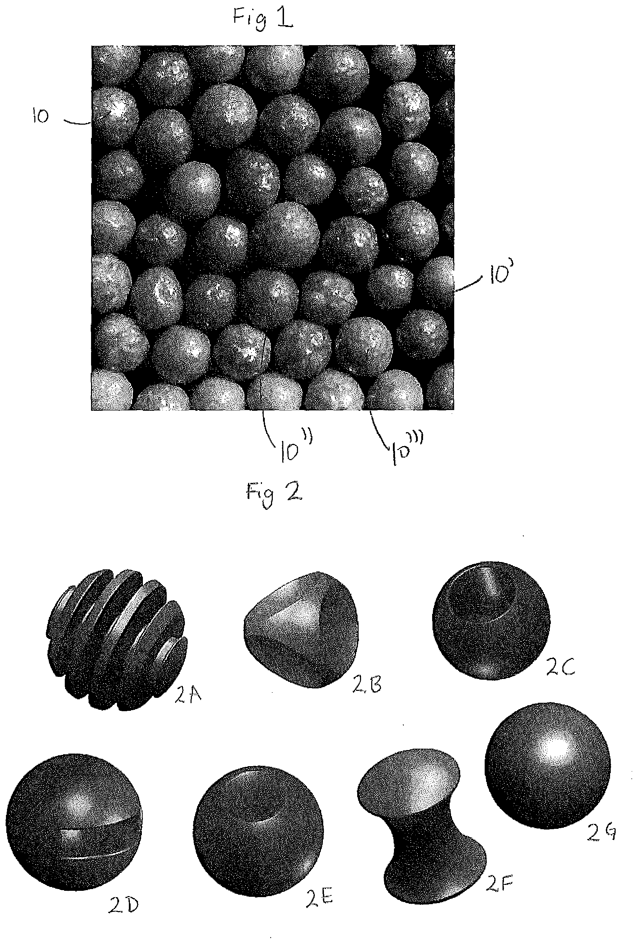

Figure 1 shows a plurality of coated puffed rice balls 10 which are an example of approximately spherical inclusions. The balls 10 do not have perfect close packing; the arrangement is not exactly regular. However, it can be seen that the packing does approach hexagonal close-packed in some regions. For example, each of balls 10', 10" and 10''' is surrounded by 6 other balls.

When the solid inclusions are close packed, the interstitial volume available for the at least one liquid component can be deduced from the packing efficiency of the solid inclusions.

In one series of embodiments, the solid inclusions constitute at least 40%, 50%, 60%, 70%, or 80% of the volume of the cavity. In one series of embodiments, the solid inclusions constitute less than 90%, 80%, 70%, 60%, or 50% of the volume of the cavity. In one particular series of embodiments, the solid inclusions constitute from 40 to 74%, from 50 to 68%, or from 55 to 64% of the volume of the cavity.

The following statements apply to at least one solid inclusion and/or the average properties of all of the solid inclusions in the shell.

In one embodiment the solid inclusions are generally spherical, ovoid, cubic, cuboid, star shaped, lozenge shaped or heart shaped. In a particular embodiment all of the solid inclusions are spherical. A range of suitable shapes for use as solid inclusions are shown in Figure 2. The shapes are either a sphere (Fig 2G) or based on a sphere but with cut-outs (Fig 2A to 2F). The use of cut-outs is thought to be useful for encouraging the liquid component to adhere thereto. In one embodiment the solid inclusions have cut-outs.

The solid inclusions may be hemi-spherical or elongate. The solid inclusions may comprise a concave portion.

In one embodiment the solid inclusions are in the form of shells such as hemi-spherical shells. Hemi-spherical shells can be prepared by passing material (e.g. chocolate) through dimpled rollers.

In one embodiment, the solid inclusions are irregularly shaped.

It is understood that spheres have the lowest surface area to volume ratio compared to other three dimensional shapes. It is an advantage of non-spherical inclusions that they provide a larger surface area per unit volume, which increases the surface available for adsorbing/absorbing the at least one liquid component. Conversely, it is an advantage of spherical inclusions that their packing density and interstitial volumes approximate mathematically defined models. This facilitates the production of reproducible confectionery compositions.

The solid inclusions may be of essentially the same size and shape, or of varying size and shape. The size of irregularly shaped inclusions may be defined as the largest diameter extending through the centre point of the inclusion. The size of spherical inclusions may be defined as the diameter of the inclusion. Where inclusions vary in size, the largest inclusion may be at least 2x the size of the smallest inclusion, at least 3x the size of the smallest inclusion, at least 4× the size of the smallest inclusion, at least 5× the size of the smallest inclusion, or at least 6× the size of the smallest inclusion.

The greater the diameter of each inclusion, the fewer can be held within the shell. It is an advantage that a large number of inclusions may be used to provide a complex mouth feel. It is an advantage of using smaller inclusions that these are compatible with a wide range of shells of different shapes and formats.

In one series of embodiments in which spherical inclusions of the same size are provided in the shell cavity, the volume of the solid inclusions constitutes less than 74%, 68%, 64%, 60%, or 50% of the volume of the cavity. In one embodiment, the spherical solid inclusions constitute at least 30%, 40%, 50%, 60%, or 70% of the volume of the cavity. In one particular embodiment, the spherical solid inclusions constitute from 30% to 70%, from 35% to 60%, from 40% to 55%, or from 45% to 50%, of the volume of the cavity.

When the confectionery shell is close packed with solid inclusions of essentially the same size, the interstitial volume the inclusions is determined by the size of the individual inclusions. It is an advantage of mixing inclusions of different size that the available interstitial volume between the solid inclusions (or, respectively, the ratio of solid volume to cavity volume) can be influenced.

In one embodiment, the solid inclusions do not readily absorb the at least one liquid component. In one embodiment, the solid inclusions do not soften when in contact with the at least one liquid component.

In one series of embodiments the solid inclusion(s) has/have a diameter of at least 0.5, 1, 2, 3, 4, 5, 6, 7, 8, 9, 10, 11, 12, 13, 14 or 15 mm. In one series of embodiments at least one solid inclusion has a diameter of no more than 40, 30, 20, 15, 12, 10, 9, 8, 7, 6, or 5 mm. In a particular embodiment at least one solid inclusion has a diameter of from 4 to 8 mm or from 5 to 7 mm.

In one embodiment, the solid inclusion(s) is/are a capsule(s) having a cavity therein. In one embodiment, the capsule(s) has/have an inner diameter (the size of the cavity within the solid inclusion) of at least 2, 2.5, 3, 3.5, 4, 4.5, 5, 5.5, 6, 6.5, 7 or 7.5 mm. In one embodiment the capsule(s) has/have an inner diameter of less than 25, 10, 15, 10 or 5 mm. In a particular embodiment the capsule(s) has/have an inner diameter of from 2 to 5 mm or from 2.5 to 4 mm.

In one embodiment the capsule(s) has/have a wall thickness (difference between inner and outer diameters) of at least 0.5, 0.75, 1, 1.25, 1.5, 1.75, 2, 2.5, 3 or 3.5 mm. In one embodiment the capsule(s) has/have a wall thickness (difference between inner and outer diameters) of less than 20, 15, 10, 5, 4.5, 4, 3, 3.5, 3, 2.5 2, 1.75, 1.5, 1.25, or 1mm.

In one embodiment the capsule(s) wall has/have uniform thickness no matter where it is measured. By uniform, we mean that the wall thickness of the capsule varies by no more than 15, 10, or 5% as compared to the average wall thickness of that capsule.

In one embodiment, the capsule has a liquid filling therein. The liquid capsule filling may be selected from the group of materials suitable as the at least one liquid component (described above).

In one embodiment, the edible shell comprises a mixture of solid inclusions. A mixture of solid inclusions may consist of spheres of the same material having different sizes. The solid inclusions may be selected from essentially two sizes.

It is understood that the size of an inclusion composition of two differently sized inclusion types may be described by a binomial distribution. Accordingly, the size of an inclusion composition of a plurality of differently sized inclusion types may be described by a multinomial distribution. An inclusion composition may consist of spheres having the same size but different material composition. An inclusion composition may consist of white chocolate and dark chocolate inclusions. The solid inclusions may vary in colour, texture, or flavour.

The solid inclusions should not absorb the liquid component (soak it up) since this would make them soggy. The solid inclusions might require a moisture barrier to prevent them absorbing the liquid component.

In one embodiment the solids inclusions are chocolate pieces, nuts or seeds (which do not require a moisture barrier).

In one embodiment the solid inclusions are selected from the group of marshmallow, puffed wheat, cookie pieces, biscuit pieces, cereals (especially expanded or puffed cereals), raisins, popcorn, dried fruit pieces, or a combination of these. These inclusions may require a moisture barrier to prevent sogginess.

In one embodiment, the solid inclusions may comprise a centre portion and a coating. The coating may be provided to prevent contact between the at least one liquid component and the centre portion of the solid inclusion. The coating may be provided to assist formation of the interconnected network.

The coating may be a solid at SATP but melt more readily than the centre portion. The coating can then be melted to fuse the solid inclusions together. In one embodiment, the coating is a glazing.

The formation of a network can be promoted by providing a coating having a lower melting temperature than the centre portion. The heat treatment can be controlled such that only the surface of the coating or an outer portion of the coating melts. During a subsequent cooling phase the adjacent surfaces can fuse together to form the network. The cooling temperature during the cooling phase may be room temperature or below room temperature.

The coating may further assist in providing a defined geometric shape of the solid inclusions, despite using irregularly shaped centre portion. For instance, pieces of nut or hard caramel may be provided in a coating with a round outer cross-section.

Different inclusion compositions may have a different capacity to retain the at least one liquid component.

It is an advantage that different inclusion compositions can be provided because this allows providing different mouth feel and visual appeal of the opened shell. It is a further advantage that the use of different inclusion compositions provides a degree of control over the retention behaviour so that it can be matched to the adhesive properties of the at least one liquid component.

The shell may comprise a gas such as air, $CO_2$ or $N_2$. The gas will be located in the interstitial volume between the solid inclusions and the at least one liquid component.

It is an advantage of providing an interconnected or partially interconnected network that a stable distribution of solid inclusions can be achieved without having to fill the shell entirely.

Upon opening the shell, it has been observed that the at least one liquid component on the solid inclusions creates a bubbly appearance. This may increase the consumer perception of liquidity and enjoyment of a luxury food item.

The cooling step facilitates the control of the fusing together of the plurality of solid inclusions.

In one embodiment the shell is a sugar-based confectionery shell or a fat-based confectionery shell. In one embodiment, the fat-based confectionery shell is a chocolate shell.

**Edible Shell Properties**

The dimensions (size and shape) of the edible shell can vary from small bite-size pieces to large tablets. The present invention is particularly beneficial for larger products where a liquid filling would otherwise be very messy to consume.

In one embodiment the edible shell has a length of at least 3, 4, 5, 6, 8, 10, 12, 15, 20 or 25 cm. In one embodiment the edible shell has a length of less than 30, 25, 20, 15 or 10cm.

In one embodiment the edible shell has a thickness of at least 2, 3, 4, 5, 6, 7, 8, 9 or 10mm. In one embodiment the edible shell has a thickness of less than 20, 15, 12, 8, 6, or 4mm.

In one embodiment the edible shell has at least 2, 3, 4, 5, 6, 7, 8, 9, 10, 11, 12, 13, 14, 15, 20, 25, 30, 40, 50, 60, 70 or 80 inclusions therein. In one embodiment, the edible shell has fewer than 200, 150, 100, 75, 65, 55, 45, 35, 25, 15 or 10 inclusions therein.

In one embodiment the edible shell is elongate with a uniform cross-section e.g. a chocolate bar. In one such embodiment the cross-section is square or rectangular (such that the shell is cuboid). In another embodiment the cross-section is trapezoidal.

In one embodiment the edible shell has a moisture barrier on its inner surface. This can be useful if the liquid component would otherwise soak into the shell.

In one embodiment, all of the solid inclusions are identical e.g. they have the same size, shape, liquid filling etc. In another embodiment the edible shell has a variety of inclusions therein.

In one embodiment, the shell contains at least one line of weakness.

It is an advantage that the at least on line of weakness facilitates the breaking off of pre-defined portion sizes. This allows predetermining portion sizes that contain a minimum number of solid inclusions.

In one embodiment, the shell has a smaller cross-section at places corresponding to the at least one line of weakness.

It is believed to be an advantage of the smaller cross-section that it impedes solid inclusions from falling out of a broken off portion.

The term 'chocolate' in the context of the present invention is not restricted by the various definitions of chocolate provided by government and regulatory bodies. A 'chocolate' may be a dark chocolate, a milk chocolate or a white chocolate.

Chocolate comprises at least one fat. The fat may be cocoa butter, butterfat, a cocoa butter equivalent (CBE), a cocoa butter substitute (CBS), a vegetable fat that is liquid at standard ambient temperature and pressure (SATP, 25°C and 100kPa) or any combination of the above. In a particular embodiment, the chocolate comprises cocoa butter.

CBEs are defined in Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the chocolate comprises no more than 5wt% CBE's.

The chocolate may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

In one embodiment the chocolate comprises fat (e.g. cocoa butter or a cocoa butter equivalent or cocoa butter substitute), a bulk sweetener (e.g. a sugar or sugar substitute) and non-fat cocoa solids (e.g. from cocoa liquor or cocoa mass).

Embodiments of the invention will now be described by way of example only in which:

Fig. 1 shows packing of solid inclusions;
Fig 2 shows a range of shapes for solid inclusions;
Fig 3 shows part of a confectionery composition in accordance with an embodiment of the invention; and
Fig. 4 shows a plurality of solid inclusions for use in an embodiment which is unrelated to the invention.

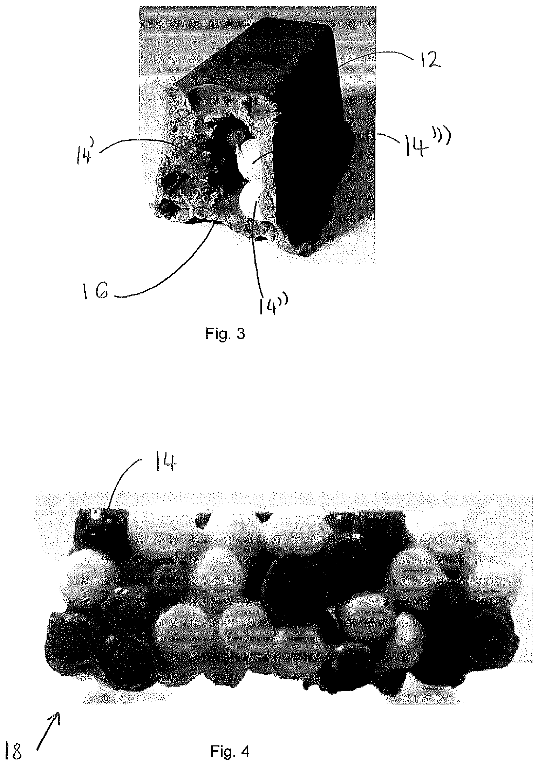

Referring to fig 3, there is shown part of a chocolate shell 12. The shell is elongate with a trapezoidal cross-section. The shell 12 has been bitten into such that three spherical solid inclusions 14 are visible. The inclusions 14 are puffed rice balls having identical dimensions. One of the rice balls 14' has a milk chocolate coating and two of the balls 14", 14''' have a white chocolate coating. The shell 12 also contains a thin (low viscosity) caramel 16. The caramel 16 does not drip; it adheres to the shell 12 and the inclusions 14.

Referring to fig 4 there is shown a network 18 of interconnected solid inclusions 14. As described in fig 3, the inclusions are puffed rice balls having either a white or a milk chocolate coating. The rice balls were heated in a mould to cause the coating to partially melt and thereby fuse the rice balls into a network.

METHODOLOGY

The viscosity of a liquid component was determined using a Bohlin CV050 rheometer at constant temperature (25°C) with shear stress being increased from 1 to 10Pa. The following example shows the measurement of the viscosity of a commercially available caramel syrup (Le sirop de Monin® caramel, available from Monin (Bourges, France)). The syrup has the following ingredients: sugar, water, flavouring, natural plant extracts, colouring agent: E150a, acidifying agent: citric acid.

| Viscosity @ 25°C (Pa.s) | | |
| --- | --- | --- |
| Shear Rate (1/s) | Shear Stress (Pa) | Viscosity (Pa.s) |
| 16.3 | 1 | 0.0612 |
| 20.9 | 1.29 | 0.0617 |
| 26.7 | 1.67 | 0.0624 |
| 34.3 | 2.15 | 0.0628 |
| 44.1 | 2.78 | 0.0631 |
| 56.6 | 3.59 | 0.0634 |
| 72.9 | 4.64 | 0.0636 |
| 94.2 | 5.99 | 0.0636 |
| 121.5 | 7.74 | 0.0638 |
| 156.5 | 10 | 0.0639 |

It can be seen that the viscosity of the caramel changes only slightly as the shear rate increases from 16.3 to

156.5s$^{-1}$; it is around 0.06Pa.s under the conditions of measurement.

COMPARATIVE EXAMPLE 1 - A chocolate bar consisting of a chocolate shell having filling, the filling comprising interconnected chocolate coated rice balls and at least 15% low viscosity caramel.

Chocolate coated rice balls (diameter 6 mm) were heated in a silicone mould at 40°C to 50°C for 10 to 15 minutes so that the chocolate glaze **partially** melted and fused the rice balls to form an interconnected network, as shown in Fig 4.

The network of glazed rice balls was then transferred to a preformed chocolate shell having a trapezoidal cross-section. The shell was 2 mm thick. A runny caramel (as described above and having a water activity of 0.7) was then added and the shell backed off. The final products contained from 15% to 25% (v/v) of liquid caramel.

Portions could be bitten from the product without caramel dripping from the open network. A representation of the confectionery composition of Example 1 is shown in Fig. 3.

## Claims

1. A confectionery composition comprising an edible shell having a filling therein, said filling comprising a plurality of solid inclusions and at least one liquid component, wherein the plurality of solid inclusions are discrete pieces and wherein the discrete pieces are close packed within the edible shell so that they cannot move over one another.

2. The composition of claim 1, wherein the solid inclusions have a coating which softens at elevated temperature.

3. The composition of either claim 1 or claim 2, wherein the at least one liquid component is caramel.

4. The composition of any one of the preceding claims, wherein the at least one liquid component has a viscosity measured at 25°C of no more than 1Pa.s.

5. The composition of any one of the preceding claims, wherein the shell defines a cavity therein and the at least one liquid component constitutes from 10 to 40% of the volume of the cavity.

6. The composition of any one of the preceding claims, wherein the shell defines a cavity therein and the solid inclusions constitute from 40 to 60% of the volume of the cavity.

7. The composition of any one of the preceding claims, wherein the solid inclusions are spherical.

8. The composition of any one of the preceding claims, wherein the solid inclusions comprise chocolate.

9. The composition of any one of the preceding claims, wherein the edible shell is a chocolate shell.

10. A method for producing a confectionery composition according to any one of the preceding claims, comprising:

    providing a plurality of solid inclusions;
    providing at least one liquid component;
    placing the plurality of solid inclusions and the at least one liquid component in an edible shell; and
    sealing the solid inclusions and the at least one liquid component within the edible shell,
    wherein placing the plurality of solid inclusions in the edible shell comprises placing discrete pieces in the edible shell, and wherein the discrete pieces are close packed within the edible shell so that they cannot move.

11. The method of claim 10, further comprising adhering the discrete pieces to one another to form a network of interconnected solid inclusions within the shell.

## Patentansprüche

1. Konfektzusammensetzung umfassend eine essbare Schale, die eine Füllung darin aufweist, wobei die Füllung eine Mehrzahl fester Einschlüsse und mindestens eine flüssige Komponente umfasst, wobei die Mehrzahl fester Einschlüsse einzelne Stücke sind und wobei die einzelnen Stücke innerhalb der essbaren Schale eng gepackt sind, so dass sie sich nicht übereinander bewegen können

**2.** Zusammensetzung nach Anspruch 1, wobei die festen Einschlüsse eine Beschichtung aufweisen, die sich bei erhöhter Temperatur erweicht.

**3.** Zusammensetzung nach entweder Anspruch 1 oder Anspruch 2, wobei die mindestens eine flüssige Komponente Karamell ist.

**4.** Zusammensetzung nach einem der vorhergehenden Ansprüche, wobei die mindestens eine flüssige Komponente eine Viskosität, bei 25 °C gemessen, von nicht mehr als 1 Pa.s. aufweist.

**5.** Zusammensetzung nach einem der vorhergehenden Ansprüche, wobei die Schale einen Hohlraum darin definiert und die mindestens eine flüssige Komponente 10 bis 40 % des Volumens des Hohlraums ausmacht.

**6.** Zusammensetzung nach einem der vorhergehenden Ansprüche, wobei die Schale einen Hohlraum darin definiert und die festen Einschlüsse 40 bis 60 % des Volumens des Hohlraums ausmachen.

**7.** Zusammensetzung nach einem der vorhergehenden Ansprüche, wobei die festen Einschlüsse kugelförmig sind.

**8.** Zusammensetzung nach einem der vorhergehenden Ansprüche, wobei die festen Einschlüsse Schokolade umfassen.

**9.** Zusammensetzung nach einem der vorhergehenden Ansprüche, wobei die essbare Schale eine Schokoladeschale ist.

**10.** Verfahren für die Herstellung einer Konfektzusammensetzung nach einem der vorhergehenden Ansprüche, umfassend:

Bereitstellen einer Mehrzahl fester Einschlüsse;
Bereitstellen mindestens einer flüssigen Komponente;
Positionieren der Mehrzahl fester Einschlüsse und der mindestens einen flüssigen Komponente in einer essbaren Schale; und
Versiegeln der festen Einschlüsse und der mindestens einen flüssigen Komponente innerhalb der essbaren Schale,
wobei das Positionieren der Mehrzahl fester Einschlüsse in der essbaren Schale das Positionieren einzelner Stücke der essbaren Schale umfasst und wobei die einzelnen Stücke innerhalb der essbaren Schale eng gepackt sind, so dass sie sich nicht bewegen können.

**11.** Verfahren nach Anspruch 10, ferner das Anhaften der einzelnen Stücke aneinander zum Bilden eines Netzwerks miteinander verbundener fester Einschlüsse innerhalb der Schale umfassend.

**Revendications**

**1.** Composition de confiserie comprenant une enveloppe comestible présentant une garniture à l'intérieur, ladite garniture comprenant une pluralité d'inclusions solides et au moins un constituant liquide, la pluralité des inclusions solides étant des éléments discrets et où les éléments discrets sont étroitement serrés à l'intérieur de l'enveloppe comestible de sorte qu'ils ne peuvent pas se déplacer l'un sur l'autre.

**2.** Composition selon la revendication 1, les inclusions solides présentant un revêtement qui ramollit à une température élevée.

**3.** Composition selon l'une ou l'autre des revendications 1 ou 2, où ledit au moins un constituant liquide est du caramel.

**4.** Composition selon l'une quelconque des revendications précédentes, dans laquelle ledit au moins un constituant liquide présente une viscosité mesurée à 25°C non supérieure à 1 Pa•s.

**5.** Composition selon l'une quelconque des revendications précédentes, dans laquelle l'enveloppe définit une cavité à l'intérieur et ledit au moins un constituant liquide constitue de 10 à 40 % du volume de la cavité.

**6.** Composition selon l'une quelconque des revendications précédentes, dans laquelle l'enveloppe définit une cavité à l'intérieur et les inclusions solides constituent de 40 à 60 % du volume de la cavité.

**7.** Composition selon l'une quelconque des revendications précédentes, dans laquelle les inclusions solides sont sphériques.

**8.** Composition selon l'une quelconque des revendications précédentes, dans laquelle les inclusions solides comprennent du chocolat.

**9.** Composition selon l'une quelconque des revendications précédentes, dans laquelle l'enveloppe comestible est une enveloppe en chocolat.

**10.** Procédé de production d'une composition de confiserie selon l'une quelconque des revendications précédentes, comprenant:

la fourniture d'une pluralité d'inclusions solides;
la fourniture d'au moins un constituant liquide;
la mise en place de la pluralité des inclusions solides et dudit au moins un constituant liquide dans une enveloppe comestible; et
la fermeture étanche des inclusions solides et dudit au moins un constituant liquide à l'intérieur de l'enveloppe comestible,
où la mise en place de la pluralité des inclusions solides dans l'enveloppe comestible comprend la mise en place d'éléments discrets dans l'enveloppe comestible, et où les éléments discrets sont étroitement serrés à l'intérieur de l'enveloppe comestible de sorte qu'ils ne peuvent pas se déplacer.

**11.** Procédé selon la revendication 10, comprenant en outre l'adhésion des éléments discrets l'un à l'autre pour former un réseau d'inclusions solides interconnectées à l'intérieur de l'enveloppe.

Fig 1

Fig 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010055257 A
- KR 20010092474
- WO 2010049671 A
- US 2005100640 A
- DE 29908226
- WO 2011027103 A
- GB 2503232 A
- GB 2432773 A
- WO 2008079927 A
- WO 2008030274 A
- WO 0178519 A